# EUROPÄISCHE PATENTSCHRIFT

(11) **EP 1 666 284 B1**
(45) Veröffentlichungstag und Bekanntmachung des Hinweises auf die Patenterteilung: **21.01.2009**
(21) Anmeldenummer: 05109639.4
(22) Anmeldetag: 17.10.2005
(51) Int. Cl.: B60H 1/00

(54) **Vorausschauende Aktivierung von Heizungssystemen von Kraftfahrzeugen**
Predictive activaton of heating systems of motor vehicles
Activation prédictive de systèmes de chauffage de véhicules automobiles

(30) Priorität: 06.12.2004 DE 102004058693
(43) Veröffentlichungstag der Anmeldung: 07.06.2006
(73) Patentinhaber: ROBERT BOSCH GMBH, 70442 Stuttgart (DE)
(72) Erfinder: Frey, Bernd, 73230, Kirchheim (DE); Schiller, Karsten, 70825, Korntal-Muenchingen (DE); Rieger, Hans-Peter, 75382, Neuhengstett (DE)

(56) Entgegenhaltungen:
- GB-A- 2 019 134
- US-A- 5 130 659
- US-A1- 2001 025 889

## Beschreibung

Die Erfindung betrifft ein Kraftfahrzeug gemäß dem Oberbegriff des Anspruchs 1 sowie ein Verfahren zur vorausschauenden Ermittlung der verfügbaren Heizenergiemenge für den Betrieb eines elektrischen Heizungssystems in einem Kraftfahrzeug gemäß dem Oberbegriff des Anspruchs 9.

### Stand der Technik

Wenn ein Kraftfahrzeug bei niedrigen Umgebungstemperaturen abgestellt wird, kühlen sich seine Fensterscheiben infolge ihres geringen Energiespeichervermögens schneller als andere durch die Innenverkleidung isolierte Teile der Fahrgastzelle ab. Dies führt dazu, dass zuvor in der erwärmten Luft der Fahrgastzelle enthaltene Luftfeuchtigkeit zuerst an den Fensterscheiben kondensiert, so dass die Scheiben häufig beschlagen sind, wenn das Kraftfahrzeug über Nacht im Freien abgestellt worden ist. Wenn das Kraftfahrzeug dann von einem Benutzer bestiegen wird, schlägt sich zudem die in der Atemluft des Benutzers enthaltene Feuchtigkeit vorwiegend auf der in Atemrichtung liegenden abgekühlten Frontscheibe nieder. Dieser Feuchtigkeitsniederschlag hat zusammen mit dem ggf. bereits vorhandenen Beschlag zur Folge, dass die Sicht des Benutzers in den ersten Minuten nach Fahrtbeginn oft beträchtlich eingeschränkt ist, bis die von der Abwärme des Verbrennungsmotors gespeiste Scheibenheizung die Innenseite der Frontscheibe soweit erwärmt, dass dort kondensierte Feuchtigkeit verdunstet und ein weiteres Kondensieren von Feuchtigkeit verhindert wird.

Um diese Probleme zu lösen, ist es bekannt, Kraftfahrzeuge mit einer Standheizung, einer elektrischen Scheibenheizung oder einer elektrischen Zusatzheizung in Form einer PTC-Heizung, d.h. einer Heizung mit positivem Temperaturkoeffizienten, auszustatten und diese Heizungen bei niedrigen Außentemperaturen mit Hilfe einer Zeitsteuerung oder einer Fernsteuerung gewisse Zeit vor der Inbetriebnahme des Fahrzeugs einzuschalten. Da diese Heizungen jedoch bei abgestelltem Fahrzeug zumeist von der Starterbatterie des Verbrennungsmotors gespeist werden, kommt es infolge des beträchtlichen Energieverbrauchs der Heizungen nicht selten vor, dass ein anschließender Start des Verbrennungsmotors wegen einer zu starken Entleerung der Starterbatterie nicht mehr möglich ist.

GB 2019134 beschreibt ein Kraftfahrzeug gemäß dem Oberbegriff des Anspruchs 1.

### Vorteile der Erfindung

Demgegenüber bieten das erfindungsgemäße Kraftfahrzeug und Verfahren mit den im Anspruch 1 bzw. 9 genannten Merkmalen den Vorteil, dass die zwischen dem Entriegeln oder Öffnen der Türen und dem Start des Verbrennungsmotors verstreichende Zeit für den Betrieb des Heizungssystems genutzt werden kann, ohne den Start durch eine unerwünschte Entladung der Starterbatterie zu gefährden. Verglichen mit einer der Inbetriebnahme des Kraftfahrzeugs vorangehenden Aktivierung des Heizungssystems durch eine Zeitsteuerung oder Fernsteuerung hat die erfindungsgemäße Lösung darüber hinaus den Vorteil, dass infolge der relativ kurzen Zeitspanne zwischen dem Entriegeln oder Öffnen der Türen und dem Starten des Verbrennungsmotors ein geringerer Teil der elektrischen Heizenergie als Verlustwärme an die Umgebung abgegeben und dadurch die Energie effizienter genutzt wird.

Außer zur Beheizung einer Front- oder Heckscheibe kann ein beim Entriegeln oder Öffnen der Türen des Kraftfahrzeugs aktiviertes Heizungssystem mit Vorteil u.a. auch zur Beheizung von Außenspiegeln des Kraftfahrzeugs, zur Vorwärmung der Starterbatterie selbst sowie bei Dieselfahrzeugen zur Vorwärmung von Kraftstoff und bei Brennstoffzellenfahrzeugen zur Batterievorwärmung eingesetzt werden.

Der Schwellenwert für die Aktivierung des Heizungssystems oder der Heizungssysteme kann eine bestimmte Energiemenge sein, die über die für den Start des Verbrennungsmotors hinaus benötigte Startenergiemenge als Reserve vorgehalten wird, zum Beispiel für einen zweiten Startversuch, wenn das Kraftfahrzeug beim Starten nicht sofort anspringt, und/oder zum Betrieb von anderen, nach dem Öffnen der Türen und vor dem Start des Verbrennungsmotors vom Benutzer eingeschalteten elektrischen Verbrauchern, wie Autoradio oder Innenbeleuchtung. Darüber hinaus kann der Schwellenwert auch der Tatsache Rechnung tragen, dass eine Aktivierung eines Heizungssystems oder von mehreren Heizungssystemen in der Regel nur dann Sinn macht, wenn das Heizungssystem oder die Heizungssysteme über eine bestimmte Mindestzeitdauer betrieben werden, bevor sie irgendeine Wirkung entfalten, so dass diese Mindestzeitdauer in Verbindung mit der Nennleistung der aktivierten Heizungssysteme ebenfalls zur Festlegung des Schwellenwerts herangezogen werden kann. Grundsätzlich könnte jedoch ein beliebiger Schwellenwert größer Null verwendet werden.

Um zu verhindern, dass bei einer Aktivierung von einem oder mehreren Heizungssystemen mehr als die berechnete Heizenergiemenge aus der Starterbatterie entnommen wird, sieht eine weitere bevorzugte Ausgestaltung der Erfindung vor, dass diese für den Betrieb des Heizungssystems verfügbare Energiemenge vom Klimasteuergerät als Heizleistungsvorgabe genutzt wird, um die maximal an das Heizungssystem abgegebene Energiemenge zu begrenzen.

Die Begrenzung erfolgt zweckmäßig dadurch, dass aus der verfügbaren Energiemenge und der Nennleistung der aktivierten Heizungssysteme die maximale Betriebsdauer der letzteren berechnet und die Stromzufuhr zu den Heizungssystemen nach Verstreichen dieser maximalen Betriebsdauer unterbrochen wird, sofern nicht zuvor der Verbrennungsmotor gestartet wird.

Die Einrichtungen zur Ermittlung der für den Betrieb des Heizungssystems verfügbaren Heizenergiemenge aus der aktuell in der Starterbatterie gespeicherten Gesamtenergiemenge und der für den Start des Verbrennungsmotors benötigten Startenergiemenge können alternativ entweder in ein Batteriesteuergerät des Kraftfahrzeugs oder in ein mit einem Batteriesensor verbundenes Bordnetzsteuergerät integriert sein, deren Kommunikation mit der Klimasteuerung bzw. untereinander zweckmäßig über einen Datenbus des Kraftfahrzeugs erfolgt.

Beim Entriegeln oder Öffnen der Türen des Kraftfahrzeugs wird der Datenbus "geweckt", was zur Abfrage von Batterieinformationen führt, die zur Ermittlung der im Abfragezeitpunkt in der Starterbatterie gespeicherten Gesamtenergiemenge und ggf. der zum Starten des Verbrennungsmotors Startenergiemenge benötigt werden. Die gespeicherte Gesamtenergiemenge, die in Form eines prozentualen Anteils des maximalen Energiespeichervermögens der Starterbatterie auch als deren Batterieladezustand bezeichnet wird, kann mit einer Reihe von verschiedenen Verfahren ermittelt werden. Zwei dieser Verfahren sind zum Beispiel in der DE 103 17 524 A1 bzw. in der DE 101 06 508 A1 der Anmelderin beschrieben.

Für die Feststellung, ob Bedarf an einer Aktivierung des Heizungssystems besteht, wird das Kraftfahrzeug gewöhnlich einen Temperatursensor umfassen, der die Temperatur der zu beheizenden Komponente oder alternativ die Umgebungstemperatur misst. Im zuletzt genannten Fall ist vorzugsweise zusätzlich ein Zeitmesser vorgesehen, der die seit dem letzten Abstellen des Verbrennungsmotors verstrichene Zeit erfasst, um eine Beheizung der Komponente nach einem kurzzeitigen Abstellen des Verbrennungsmotors zu vermeiden. Neben dem Temperatursensor und ggf. dem Zeitmesser ist zweckmäßig mindestens eine Vergleichsschaltung vorhanden, mit der die vom Temperatursensor ermittelte Temperatur bzw. die vom Zeitmesser ermittelte Zeit mit einem mit einem voreingestellten Temperatur- bzw. Zeitschwellenwert verglichen wird, bei dessen Unter- bzw. Überschreitung eine Inbetriebnahme des Heizungssystems als erwünscht angesehen wird.

### Zeichnungen

Die Erfindung wird nachfolgend in zwei Ausführungsbeispielen anhand der zugehörigen Zeichnungen näher erläutert. Es zeigen:
- Figur 1: ein Blockdiagramm eines Kraftfahrzeugs mit mehreren durch eine Klimasteuerung bedarfsabhängig aktivierbaren elektrischen Heizungssystemen;
- Figur 2: ein Blockdiagramm eines anderen Kraftfahrzeugs mit mehreren durch eine Klimasteuerung bedarfsabhängig aktivierbaren elektrischen Heizungssystemen.

### Beschreibung der Ausführungsbeispiele

Die in der Zeichnung schematisch in Form von Blockschaubildern dargestellten Kraftfahrzeuge 2 weisen jeweils einen Verbrennungsmotor 4 mit einem von einer Starterbatterie 6 gespeisten elektrischen Anlasser oder Starter 8 sowie eine Mehrzahl von elektrischen Heizungssystemen 10, 12, 14, 16, 18 auf, die ebenfalls von der Starterbatterie 6 gespeist und von einer Klimasteuerung 20 des Kraftfahrzeugs 2 bedarfsabhängig aktiviert werden.

Die Heizungssysteme 10, 12, 14, 16, 18 können u.a. eine elektrische Scheibenheizung 10 zur Beheizung einer Heckscheibe des Kraftfahrzeugs 2, eine als PTC-Heizung ausgebildete elektrische Zusatzheizung 12 zur Beheizung einer Frontscheibe des Kraftfahrzeugs 2, eine Spiegelheizung 14 zur Beheizung von Außenspiegeln des Kraftfahrzeugs 2, eine Sitzheizung 16 zur Beheizung eines Fahrersitzes des Kraftfahrzeugs 2, eine elektrische Heizung 18 zur Vorwärmung der Starterbatterie 6 sowie ggf. weitere, nicht dargestellte elektrische Heizungen umfassen.

Die Klimasteuerung 20 umfasst einen Außenlufttemperatursensor 22 zur Messung der Temperatur der Umgebungsluft des Kraftfahrzeugs 2 sowie einen Zeitmesser 24 zur Messung der seit dem letzten Abstellen des Kraftfahrzeugs 2 verstrichenen Zeitspanne und aktiviert die Heizungssysteme 10, 12, 14, 16, 18 oder einen ausgewählten Teil der Heizungssysteme 10, 12, 14, 16, 18, wenn die vom Außenlufttemperatursensor 22 gemessene Temperatur einen vorgegebenen oder voreinstellbaren Temperaturschwellenwert unterschreitet und das Kraftfahrzeug 2 über eine längere, für die Abkühlung der mittels der Heizungssysteme 10, 12, 14, 16, 18 beheizten Komponenten auf Umgebungstemperatur ausreichende Zeitspanne abgestellt war. Diese Zeitspanne kann sowohl in Abhängigkeit von der gemessenen Umgebungstemperatur als auch in Abhängigkeit von der jeweiligen Komponente unterschiedlich sein, da zum Beispiel die Außenspiegel infolge ihrer exponierten Lage und ihrer geringen Wärmekapazität erheblich schneller abkühlen als die Starterbatterie 6, die innerhalb des Motorraums des Fahrzeugs 2 angeordnet ist, neben einem isolierenden Gehäuse eine relativ große Wärmekapazität besitzt und ggf. noch längere Zeit nach dem Abstellen des in der Nähe angeordneten Verbrennungsmotors 4 durch dessen Wärmeabstrahlung erwärmt wird.

Die bedarfsabhängige Aktivierung der Heizungssysteme 10, 12, 14, 16, 18 durch die Klimasteuerung 20 erfolgt beim Entriegeln bzw. Öffnen der Türen des Kraftfahrzeugs 2, so dass die zwischen diesem Zeitpunkt und dem Starten des Verbrennungsmotors 4 verstreichende Zeit genutzt werden kann, um die Sicht eines Benutzers bei Fahrtbeginn, seinen Sitzkomfort nach dem Einsteigen oder Betriebsbedingungen des Kraftfahrzeugs 2 durch Aktivierung des Heizungssystems 10, 12, 14, 16, 18 von einer oder mehreren der zuvor genannten Komponenten zu verbessern.

Um zu verhindern, dass die Starterbatterie 6 durch die Aktivierung der Heizungssysteme 10, 12, 14, 16, 18 oder eines Teils der Heizungssysteme 10, 12, 14, 16, 18 so stark entleert wird, dass ein anschließender Start des Verbrennungsmotors 4 unmöglich ist, wird vor jeder Aktivierung eines Heizungssystems 10, 12, 14, 16, 18 bei abgestelltem Verbrennungsmotor 4 geprüft, wie groß die Menge der im Prüfungszeitpunkt in der Starterbatterie 6 gespeicherten Gesamtenergie ist, und ob die Differenz zwischen dieser Gesamtenergiemenge und der zum Starten des Verbrennungsmotors 4 erforderlichen Startenergiemenge ausreicht, um eines oder mehrere der Heizungssysteme 10, 12, 14, 16, 18 zu betreiben, bis entweder der Verbrennungsmotor 4 gestartet wird oder die berechnete Differenzenergiemenge aufgebraucht ist.

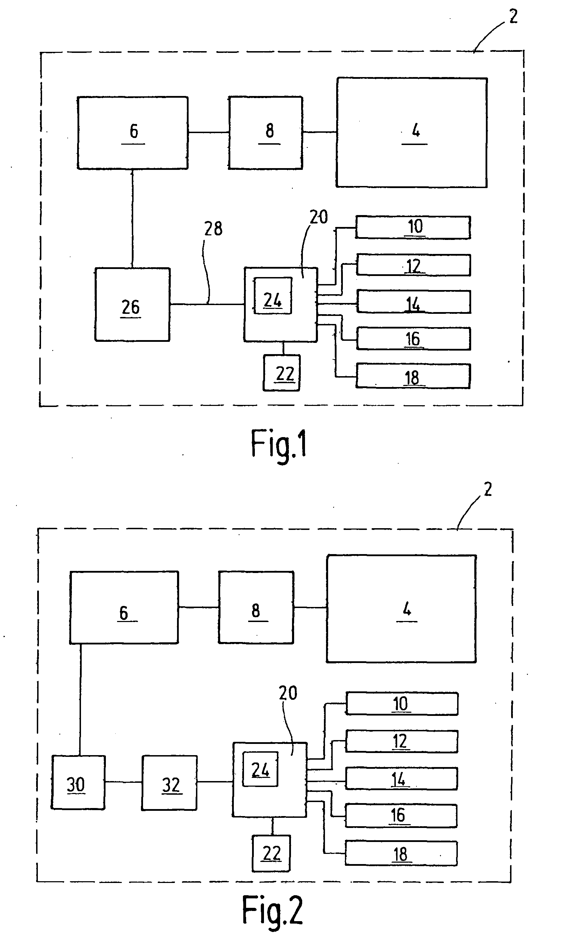

Zu diesem Zweck umfasst das Kraftfahrzeug 2 bei dem in Fig. 1 dargestellten Ausführungsbeispiel ein Batteriesteuergerät 26, das die für den Ladezustand der Starterbatterie 6 relevanten Informationen, wie Batterieklemmenspannung U, Einschaltstrom I oder Batterietemperatur T liefert und über einen Datenbus 28 mit der Klimasteuerung 20 verbunden ist, während das Kraftfahrzeug in Fig. 2 an Stelle des Batteriesteuergeräts 26 ein aus einem Batteriesensor 30 und einem Bordnetzsteuergerät 32 bestehendes partitioniertes System verwendet, in dem vom Batteriesensor 30 die für den Ladezustand der Starterbatterie 6 relevanten Informationen abgefragt und an das Bordnetzsteuergerät 32 weiter geleitet werden.

Bei dem in Fig. 1 dargestellten Kraftfahrzeug 2 erfolgt die Ermittlung der jeweils in der Starterbatterie 6 gespeicherten Gesamtenergiemenge im Batteriesteuergerät 26, indem beim Entriegeln der Türen von diesem mittels eines geeigneten Algorithmus der aktuelle Ist-Ladezustand der Starterbatterie 6, d.h. der verfügbare prozentuale Anteil der bei vollständig geladener Batterie 6 in dieser gespeicherten Energiemenge, ermittelt wird. Dieser Ist-Ladezustand kann zum Beispiel aus einem beim letzten Abstellen des Verbrennungsmotors 4 unter Zugrundelegung von Messwerten der Batteriespannung U, des Batteriestroms I und der Batterietemperatur T ermittelten Abstell-Ladezustand sowie der vom Zeitmesser 24 oder einem anderen Zeitmesser im Batteriesteuergerät 26 gemessenen Zeitspanne seit dem letzten Abstellen ermittelt werden, wie in der bereits genannten DE 103 17 524 A1 der Anmelderin beschrieben. In dieser Druckschrift ist auch ein mögliches Verfahren zur Ermittlung des zum Starten des Verbrennungsmotors 4 erforderlichen Startmoments offenbart, aus dem sich wiederum die zum Starten benötigte Startenergiemenge berechnen lässt.

Bei dem in Fig. 2 dargestellten Kraftfahrzeug wird beim Entriegeln der Türen ein CAN-Datenbus (nicht dargestellt) des Kraftfahrzeugs 2 "geweckt", was im Bordnetzsteuergerät 32 eine Abfrage der relevanten Batterieinformationen beim Batteriesensor 30 auslöst. Diese Batterieinformationen können die oben bereits genannten Angaben oder alternativ andere Informationen umfassen, die vom Bordnetzsteuergerät 32 für die Ermittlung der im Abfragezeitpunkt in der Starterbatterie 6 gespeicherten Gesamtenergiemenge benötigt werden, wie zum Beispiel in der DE 101 06 508 A1 der Anmelderin beschrieben. Die weiter benötigte Startenergiemenge kann wie oben beschrieben ermittelt werden.

Der Wert der Differenz der beiden Energiemengen, d.h. der tatsächlich gespeicherten Gesamtenergiemenge und der benötigten Startenergiemenge stellt einen Energievorrat dar, der bis zum bevorstehenden Start des Verbrennungsmotors 4 ganz oder teilweise verbraucht werden kann, ohne die Startfähigkeit des Verbrennungsmotors 4 zu beeinträchtigen. Vorzugsweise wird jedoch nicht der gesamte Energievorrat zum Verbrauch freigegeben, sondern ein Teil davon für den Fall reserviert, dass der Verbrennungsmotor 4 nicht beim ersten Startversuch anspringt und ein zweiter Startversuch erforderlich wird. Außerdem steht die zum Verbrauch freigegebene Energiemenge nicht in voller Höhe den Heizungssystemen 10, 12, 14, 16, 18 zur Verfügung, da ein Teil dieser Energiemenge für andere elektrische Verbraucher reserviert bleibt, die zwischen dem Entriegeln der Türen des Kraftfahrzeugs 2 und dem Starten des Verbrennungsmotors 4 eingeschaltet werden, wie zum Beispiel die Innenbeleuchtung oder ein Autoradio des Kraftfahrzeugs 2. Die nach dieser Korrektur ermittelte Restenergiemenge kann jedoch von den verschiedenen Heizungssystemen 10, 12, 14, 16, 18 bis zum Start des Verbrennungsmotors 4 als Heizenergie "verbraucht" werden und wird dazu vom Batteriesteuergerät 26 bzw. vom Bordnetzsteuergerät 32 dem Klimasteuergerät 20 als Verbraucherabschaltstufe vorgegeben.

Wenn ausreichend Heizenergie zur Verfügung steht, d.h. die Startfähigkeit des Verbrennungsmotors 4 auch bei längerem Betrieb sämtlicher Heizungssysteme 10, 12, 14, 16, 18 nicht gefährdet ist, kann die Heizenergie von der Klimasteuerung 20 gleichmäßig auf alle Heizungssysteme 10, 12, 14, 16, 18 verteilt werden, für die zuvor ein Bedarf ermittelt wurde, um bereits vor dem Start des Verbrennungsmotors 4 für möglichst optimale Fahrtbedingungen zu sorgen. Wenn die ermittelte Heizenergiemenge hingegen nach einem längeren Stillstand des Fahrzeugs 2 nicht mehr für einen wirkungsvollen Betrieb sämtlicher Heizungssysteme 10, 12, 14, 16, 18 ausreicht, wird die verbleibende Energiemenge von der Klimasteuerung 20 gemäß einer gespeicherten Präferenzliste an die Heizungssysteme 10, 12, 14, 16, 18 verteilt, indem zum Beispiel das Heizungssystem 18 für die Vorwärmung der Starterbatterie 6 oder die Zusatzheizung 12 für die Frontscheibe aktiviert werden, nicht jedoch die übrigen Heizungssysteme 10, 14, 16.

Um in einem solchen Fall dafür zu sorgen, dass die begrenzte Heizenergiemenge einerseits den ausgewählten Heizungssystemen 12, 18 vollständig zur Verfügung steht, andererseits der Starterbatterie 6 jedoch nicht mehr Energie als die berechnete Heizenergiemenge entnommen wird, wird diese von der Klimasteuerung 20 auf die gewünschten Heizungssysteme 12, 18 aufgeteilt und diesen in Form einer Heizleistungsvorgabe zur Verfügung gestellt, um die Heizungssysteme 12, 18 in Abhängigkeit von ihrer Nennleistung so lange zu betreiben, bis die Vorgabe aufgebraucht ist.

## Patentansprüche

1. Kraftfahrzeug mit einem Verbrennungsmotor und mindestens einem von einer Starterbatterie des Kraftfahrzeugs gespeisten, vor einem Start des Verbrennungsmotors durch eine Klimasteuerung bedarfsabhängig aktivierbaren elektrischen Heizungssystem, **dadurch gekennzeichnet, dass** Einrichtungen (26, 32) zur Ermittlung der für den Betrieb des Heizungssystems in der Starterbatterie (6) verfügbaren Heizenergiemenge aus der Differenz einer aktuell in der Starterbatterie (6) gespeicherten Gesamtenergiemenge und einer zum Starten des Verbrennungsmotors (2) benötigten Startenergiemenge vorgesehen sind, und dass die Klimasteuerung (20) das Heizungssystem (10, 12, 14, 16, 18) beim Entriegeln von Türen des Kraftfahrzeugs (2) bedarfsabhängig aktiviert, wenn die für den Betrieb des Heizungssystems (10, 12, 14, 16, 18) verfügbare Heizenergiemenge einen vorgestimmten Schwellenwert übersteigt.

2. Kraftfahrzeug nach Anspruch 1, **dadurch gekennzeichnet, dass** die Einrichtungen zur Ermittlung der aktuell in der Starterbatterie (6) gespeicherten Gesamtenergiemenge, der zum Starten des Verbrennungsmotors (2) benötigten Startenergiemenge und/oder der für den Betrieb des Heizungssystems (10, 12, 14, 16, 18) verfügbaren Heizenergiemenge in ein Batteriesteuergerät (26) des Kraftfahrzeugs (2) integriert sind.

3. Kraftfahrzeug nach Anspruch 1, **dadurch gekennzeichnet, dass** die Einrichtungen zur Ermittlung der aktuell in der Starterbatterie (6) gespeicherten Gesamtenergiemenge, der zum Starten des Verbrennungsmotors (2) benötigten Startenergiemenge und/oder der für den Betrieb des Heizungssystems (10, 12, 14, 16, 18) verfügbaren Heizenergiemenge in ein mit einem Batteriesensor (30) verbundenes Bordnetzsteuergerät (32) des Kraftfahrzeugs (2) integriert sind.

4. Kraftfahrzeug nach einem der vorangehenden Ansprüche, **dadurch gekennzeichnet, dass** die Klimasteuerung (20) einen Temperatursensor (22) zur Ermittlung der Außenlufttemperatur und eine Vergleichsschaltung zum Vergleich der ermittelten Außenlufttemperatur mit einem voreingestellten Temperaturschwellenwert umfasst.

5. Kraftfahrzeug nach einem der vorangehenden Ansprüche, **dadurch gekennzeichnet, dass** die Klimasteuerung (20) einen Zeitmesser (24) zur Ermittlung der Zeitspanne seit dem Abstellen des Verbrennungsmotors (4) und eine Vergleichsschaltung zum Vergleich der ermittelten Zeitspanne mit einem voreingestellten Zeitschwellenwert umfasst.

6. Kraftfahrzeug nach einem der vorangehenden Ansprüche, **dadurch gekennzeichnet, dass** das mindestens eine Heizungssystem (10, 12, 14) zur Beheizung von mindestens einer Fahrzeugscheibe und/oder mindestens einem Fahrzeugaußenspiegel dient.

7. Kraftfahrzeug nach einem der vorangehenden Ansprüche, **dadurch gekennzeichnet, dass** das mindestens eine Heizungssystem eine PTC-Heizung ist.

8. Kraftfahrzeug nach einem der vorangehenden Ansprüche, **dadurch gekennzeichnet, dass** das mindestens eine Heizungssystem zur Vorwärmung der Starterbatterie (6) dient.

9. Verfahren zum Betreiben eines elektrischen Heizungssystem in einem Kraftfahrzeug mit einem Verbrennungsmotor, wobei das Heizungssystem von einer Starterbatterie des Kraftfahrzeugs gespeist und von einer Klimasteuerung des Kraftfahrzeugs bedarfsabhängig aktiviert wird, **dadurch gekennzeichnet, dass** die für den Betrieb des Heizungssystems in der Starterbatterie (6) verfügbare Heizenergiemenge aus der Differenz einer aktuell in der Starterbatterie (6) gespeicherten Gesamtenergiemenge und einer zum Starten des Verbrennungsmotors (4) benötigten Startenerglemenge berechnet und das Heizungssystem (10, 12, 14, 16, 18) beim Entriegeln von Türen des Kraftfahrzeugs (2) bedarfsabhängig von der Klimasteuerung (20) aktiviert wird, wenn die für den Betrieb des Heizungssystems (10, 12, 14, 16, 18) verfügbare Heizenergiemenge einen vorgestimmten Schwellenwert übersteigt.

10. Verfahren nach Anspruch 9, **dadurch gekennzeichnet, dass** bei der Berechnung der für den Betrieb des Heizungssystems (10, 12, 14, 16, 18) in der Starterbatterie (6) verfügbare Heizenergiemenge eine Energiereserve berücksichtigt wird.

## Claims

1. Motor vehicle having an internal combustion engine and having at least one electrical heating system which is fed by a starter battery of the motor vehicle and which can be activated according to demand by an air-conditioning controller before a start of the internal combustion engine, **characterized in that** devices (26, 32) are provided for determining the heating energy quantity available in the starter battery (6) for the operation of the heating system from the difference between a total energy quantity presently stored in the starter battery (6) and a starting energy quantity required for starting the internal combustion engine (4), and **in that** the air-conditioning controller (20) activates the heating system (10, 12, 14, 16, 18) according to demand when doors of the motor vehicle (2) are unlocked if the heating energy quantity available for the operation of the heating system (10, 12, 14, 16, 18) exceeds a predetermined threshold value.

2. Motor vehicle according to Claim 1, **characterized in that** the devices for determining the total energy quantity presently stored in the starter battery (6), the starting energy quantity required for starting the internal combustion engine (4) and/or the heating energy quantity available for operating the heating system (10, 12, 14, 16, 18) are integrated in a battery control unit (26) of the motor vehicle (2).

3. Motor vehicle according to Claim 1, **characterized in that** the devices for determining the total energy quantity presently stored in the starter battery (6), the starting energy quantity required for starting the internal combustion engine (4) and/or the heating energy quantity available for operating the heating system (10, 12, 14, 16, 18) are integrated into an on-board electrical system control unit (32), which is connected to a battery sensor (30), of the motor vehicle (2).

4. Motor vehicle according to one of the preceding claims, **characterized in that** the air-conditioning controller (20) comprises a temperature sensor (22) for determining the outside air temperature, and a comparator circuit for comparing the determined outside air temperature with a preset temperature threshold value.

5. Motor vehicle according to one of the preceding claims, **characterized in that** the air-conditioning controller (20) comprises a timer (24) for determining the time period which has elapsed since the internal combustion engine (4) was shut down, and a comparator circuit for comparing the determined time period with a preset time threshold value.

6. Motor vehicle according to one of the preceding claims, **characterized in that** the at least one heating system (10, 12, 14) serves to heat at least one vehicle window and/or at least one vehicle external mirror.

7. Motor vehicle according to one of the preceding claims, **characterized in that** the at least one heating system is a PTC heater.

8. Motor vehicle according to one of the preceding claims, **characterized in that** the at least one heating system serves to pre-heat the starter battery (6).

9. Method for operating an electrical heating system in a motor vehicle having an internal combustion engine, with the heating system being fed by a starter battery of the motor vehicle and being activated according to demand by an air-conditioning controller of the motor vehicle, **characterized in that** the heating energy quantity available in the starter battery (6) for the operation of the heating system is calculated from the difference between a total energy quantity presently stored in the starter battery (6) and a starting energy quantity required for starting the internal combustion engine (4), and the heating system (10, 12, 14, 16, 18) is activated according to demand by the air-conditioning controller (20) when doors of the motor vehicle (2) are unlocked if the heating energy quantity available for the operation of the heating system (10, 12, 14, 16, 18) exceeds a predetermined threshold value.

10. Method according to Claim 9, **characterized in that** an energy reserve is taken into consideration in the calculation of the heating energy quantity available for the operation of the heating system (10, 12, 14, 16, 18) in the starter battery (6).

## Revendications

1. Véhicule automobile comprenant un moteur à combustion interne et au moins un système de chauffage électrique alimenté par une batterie de démarreur du véhicule automobile, pouvant être activé avant un démarrage du moteur à combustion interne par une commande de climatisation en fonction des besoins, **caractérisé en ce que** des dispositifs (26, 32) pour déterminer la quantité d'énergie de chauffage disponible pour le fonctionnement du système de chauffage dans la batterie de démarreur (6) à partir de la différence d'une quantité d'énergie totale stockée actuellement dans la batterie de démarreur (6) et d'une quantité d'énergie de départ nécessaire pour faire démarrer le moteur à combustion interne (4) sont prévus, et **en ce que** la commande de climatisation (20) active le système de chauffage (10, 12, 14, 16, 18) lors du déverrouillage de portes du véhicule automobile (2) en fonction des besoins, lorsque la quantité d'énergie de chauffage disponible pour le fonctionnement du système de chauffage (10, 12, 14, 16, 18) dépasse une valeur seuil prédéterminée.

2. Véhicule automobile selon la revendication 1, **caractérisé en ce que** les dispositifs pour déterminer la quantité d'énergie totale stockée actuellement dans la batterie de démarreur (6), la quantité d'énergie de départ nécessaire pour faire démarrer le moteur à combustion interne (4) et/ou la quantité d'énergie de chauffage disponible pour le fonctionnement du système de chauffage (10, 12, 14, 16, 18) sont intégrés dans un appareil de commande de batterie (26) du véhicule automobile (2) .

3. Véhicule automobile selon la revendication 1, **caractérisé en ce que** les dispositifs pour déterminer la quantité d'énergie totale stockée dans la batterie de démarreur (6), la quantité d'énergie de départ nécessaire pour faire démarrer le moteur à combustion interne (4) et/ou la quantité d'énergie de chauffage disponible pour le fonctionnement du système de chauffage (10, 12, 14, 16, 18) sont intégrés dans un appareil de commande du réseau de bord (32) du véhicule automobile (2) connecté à un capteur de batterie (30).

4. Véhicule automobile selon l'une quelconque des revendications précédentes, **caractérisé en ce que** la commande de climatisation (20) comprend un capteur de température (22) pour détecter la température de l'air extérieur et un circuit de comparaison pour comparer la température de l'air extérieur détectée avec une valeur seuil de température préajustée.

5. Véhicule automobile selon l'une quelconque des revendications précédentes, **caractérisé en ce que** la commande de climatisation (20) comprend une horloge (24) pour déterminer le temps écoulé depuis l'arrêt du moteur à combustion interne (4) et un circuit de comparaison pour comparer le temps écoulé déterminé avec une valeur seuil de temps préajustée.

6. Véhicule automobile selon l'une quelconque des revendications précédentes, **caractérisé en ce que** l'au moins un système de chauffage (10, 12, 14) sert au chauffage d'au moins une vitre du véhicule et/ou d'au moins un rétroviseur extérieur du véhicule.

7. Véhicule automobile selon l'une quelconque des revendications précédentes, **caractérisé en ce que** l'au moins un système de chauffage est un chauffage à CTP.

8. Véhicule automobile selon l'une quelconque des revendications précédentes, **caractérisé en ce que** l'au moins un système de chauffage sert au préchauffage de la batterie de démarreur (6).

9. Procédé pour faire fonctionner un système de chauffage électrique dans un véhicule automobile comprenant un moteur à combustion interne, dans lequel le système de chauffage est alimenté par une batterie de démarrage du véhicule automobile et est activé par une commande de climatisation du véhicule automobile en fonction des besoins, **caractérisé en ce que** la quantité d'énergie de chauffage disponible pour le fonctionnement du système de chauffage dans la batterie de démarreur (6) est calculée à partir de la différence d'une quantité d'énergie totale stockée actuellement dans la batterie de démarreur (6) et d'une quantité d'énergie de départ nécessaire pour le démarrage du moteur à combustion interne (4), et le système de chauffage (10, 12, 14, 16, 18) est activé lors du déverrouillage des portes du véhicule automobile (2) en fonction des besoins par la commande de climatisation (20), lorsque la quantité d'énergie de chauffage disponible pour le fonctionnement du système de chauffage (10, 12, 14, 16, 18) dépasse une valeur seuil prédéterminée.

10. Procédé selon la revendication 9, **caractérisé en ce que** lors du calcul de la quantité d'énergie de chauffage disponible pour le fonctionnement du système de chauffage (10, 12, 14, 16, 18) dans la batterie de démarreur (6), on tient compte d'une réserve d'énergie.
